# EUROPEAN PATENT APPLICATION

(11) **EP 3 885 960 A1**
(43) Date of publication of application: **29.09.2021**
(21) Application number: 21165071.8
(22) Date of filing: 25.03.2021
(51) Int. Cl.: G06F 30/28, G06F 113/22

(54) **FLUID DYNAMICS MODELING TO DETERMINE A PORE PROPERTY OF A SCREEN DEVICE**

(30) Priority: 26.03.2020 WO PCT/US2020/025054
(71) Applicant: Hewlett-Packard Development Company, L.P., Spring, TX 77389 (US)
(72) Inventor: BRIDEN, John Joseph, Palo Alto, CA 94304-110 (US)
(74) Representative: Haseltine Lake Kempner LLP

(57) **Abstract**

According to examples, an apparatus (100) may include a processor (102) that may access a digital design of a screen device having pores (112), in which the screen device may be employed to filter liquid from a slurry of the liquid and material elements. The processor may also apply fluid dynamics modeling on the digital design of the screen device (114) to model how the liquid is predicted to flow through the screen device during application of a pressure through the screen device, in which the fluid dynamics modeling is applied on a plurality of digital designs of the screen device having various pore properties with respect to each other and may determine, based on the applied fluid dynamics modeling, the pore property of the various pore properties that is predicted to result in the part being formed to have an optimized attribute and/or the part being formed in a minimum length of time (116).

## Description

### BACKGROUND

Various types of products may be fabricated from a pulp of material. Particularly, a pulp molding die that includes a main body and a wire mesh may be immersed in the pulp of material and the material in the pulp may form into the shape of the main body and the wire mesh. The main body and the wire mesh may have a desired shape of the product to be formed and may thus have a complex shape. The main body and the wire mesh may include numerous pores for liquid passage, in which the pores in the wire mesh may be significantly smaller than the pores in the main body. During formation of the product, a vacuum force may be applied through the pulp molding die which may cause the material in the pulp to be sucked onto the wire mesh and form into a shape that matches the shape of the pulp molding die. The material may be removed from the wire mesh and may be solidified to have the desired shape.

### BRIEF DESCRIPTION OF THE DRAWINGS

Features of the present disclosure are illustrated by way of example and not limited in the following figure(s), in which like numerals indicate like elements, in which:
FIG. 1 shows a block diagram of an example apparatus that may determine a pore property for an example screen device;
FIGS. 2A and 2B, respectively, depict cross-sectional side views of an example pulp molding die in which the example screen device discussed with respect to FIG. 1 may be implemented;
FIG. 3 shows an example 3D fabrication system that may be employed to fabricate the screen device depicted in FIGS. 2A and 2B,
FIG. 4 shows a flow diagram of an example method for determining pores having a first property or a second property that is predicted to result in a part being formed to have a superior attribute and/or the part being formed in a shorter length of time for use in fabricating the screen device; and
FIG. 5 shows a block diagram of a computer-readable medium that may have stored thereon computer-readable instructions for selecting a digital design of a screen device predicted to result in the part being formed to have a superior attribute and/or the part being formed in a shorter length of time for use in fabricating the screen device.

### DETAILED DESCRIPTION

For simplicity and illustrative purposes, the present disclosure is described by referring mainly to examples. In the following description, numerous specific details are set forth in order to provide a thorough understanding of the present disclosure. It will be readily apparent however, that the present disclosure may be practiced without limitation to these specific details. In other instances, some methods and structures have not been described in detail so as not to unnecessarily obscure the present disclosure.

Throughout the present disclosure, the terms "a" and "an" are intended to denote at least one of a particular element. As used herein, the term "includes" means includes but not limited to, the term "including" means including but not limited to. The term "based on" means based at least in part on.

Disclosed herein are apparatuses that may determine a pore property for a screen device that may be employed to filter liquid from a slurry composed of the liquid and material elements to form a part from the material elements that are compacted onto the screen device through application of a vacuum force on the slurry through the screen device. Also disclosed herein are methods and computer-readable mediums that may determine the pore property.

As discussed herein, a processor of the apparatus may determine properties of the pores of a screen device, which may be part of a pulp molding die (or equivalently, a mold tool set), that may result in a part formed on the screen device having an optimized attribute and/or the part being formed in a minimized length of time. The attribute may be, for instance, an accuracy level of the part, an amount of material used to form the part, and/or the like. An optimized accuracy level may correspond to a part matching a design of the part most closely. An optimized amount of material may be a minimized amount of material that may be used to form a part while meeting minimum intended structural attributes of the part.

The processor may determine the properties through application of fluid dynamics modeling on various versions of a digital design of the screen device, in which the various versions may include pores of various properties with respect to each other. The various properties may include, for instance, sizes of the pores, shapes of the pores, locations of the pores, densities at which the pores are positioned across the screen device, etc. The processor may also analyze results of the fluid dynamics modeling on the various versions to determine the resulting attributes and/or the lengths of time predicted to be consumed in forming a part for the various versions. The processor may further determine which of the resulting attributes among the various versions is the superior attribute and/or which of the various versions is predicted to result in the part being formed in a minimum length of time among the various versions.

The processor may design the screen device to be fabricated with pores having the pore property that is determined to result in attributes being optimized and/or the length of time to form the part being reduced or minimized. In addition, the processor may cause and/or control a fabrication system to fabricate the screen device to have the design.

Through implementation of the features of the present disclosure, the pores in a 3D fabricated screen device may be designed to enable parts formed on the screen device to be fabricated in an efficient manner. For instance, the 3D fabricated screen may be designed with pores having properties that enable the parts to be formed accurately, with efficient material usage, in reduced or minimized lengths of time, and/or the like.

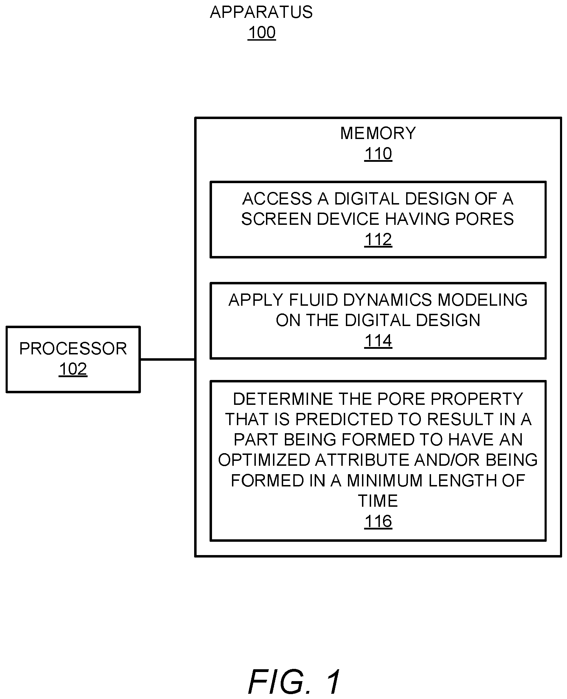

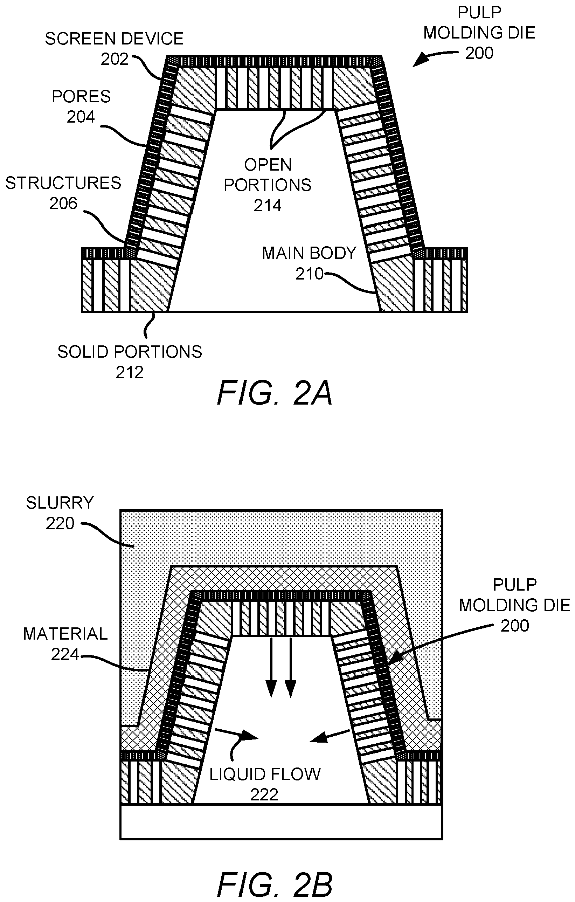

Reference is first made to FIGS. 1, 2A, and 2B. FIG. 1 shows a block diagram of an example apparatus 100 that may determine a pore property for an example screen device 202 that is to be generated. FIGS. 2A and 2B, respectively, show cross-sectional side views of an example pulp molding die 200 in which the example screen device 202 discussed with respect to FIG. 1 may be implemented. It should be understood that the example apparatus 100 depicted in FIG. 1 and/or the example pulp molding die 200 depicted in FIGS. 2A and 2B may include additional features and that some of the features described herein may be removed and/or modified without departing from the scopes of the apparatus 100 and/or the pulp molding die 200.

The apparatus 100 may be a computing system such as a server, a laptop computer, a tablet computer, a desktop computer, or the like. As shown, the apparatus 100 may include a processor 102, which may be a semiconductor-based microprocessor, a central processing unit (CPU), an application specific integrated circuit (ASIC), a field-programmable gate array (FPGA), and/or other suitable hardware device. The apparatus 100 may also include a memory 110 that may have stored thereon machine-readable instructions (which may also be termed computer-readable instructions) that the processor 102 may execute. The memory 110 may be an electronic, magnetic, optical, or other physical storage device that contains or stores executable instructions. The memory 110 may be, for example, Random Access memory (RAM), an Electrically Erasable Programmable Read-Only Memory (EEPROM), a storage device, an optical disc, and the like. The memory 110, which may also be referred to as a computer readable storage medium, may be a non-transitory machine-readable storage medium, where the term "non-transitory" does not encompass transitory propagating signals.

Although the apparatus 100 is depicted as having a single processor 102, it should be understood that the apparatus 100 may include additional processors and/or cores without departing from a scope of the apparatus 100. In this regard, references to a single processor 102 as well as to a single memory 110 may be understood to additionally or alternatively pertain to multiple processors 102 and multiple memories 110. In addition, or alternatively, the processor 102 and the memory 110 may be integrated into a single component, e.g., an integrated circuit on which both the processor 102 and the memory 110 may be provided.

As shown in FIG. 1, the memory 110 may have stored thereon machine-readable instructions 112-116 that the processor 102 may execute. Although the instructions 112-116 are described herein as being stored on the memory 110 and may thus include a set of machine-readable instructions, the apparatus 100 may include hardware logic blocks that may perform functions similar to the instructions 112-116. For instance, the processor 102 may include hardware components that may execute the instructions 112-116. In other examples, the apparatus 100 may include a combination of instructions and hardware logic blocks to implement or execute functions corresponding to the instructions 112-116. In any of these examples, the processor 102 may implement the hardware logic blocks and/or execute the instructions 112-116. As discussed herein, the apparatus 100 may also include additional instructions and/or hardware logic blocks such that the processor 102 may execute operations in addition to or in place of those discussed above with respect to FIG. 1.

The processor 102 may execute the instructions 112 to access a digital design of a screen device 202 having pores 204, in which the screen device 202 may be employed to filter liquid from a slurry composed of the liquid and material elements to form a part from the material elements. In some examples, the liquid may be water or another type of suitable liquid in which pulp material, e.g., paper, wood, fiber crops, bamboo, or the like, may be mixed into a slurry. The material elements may be, for instance, fibers of the pulp material.

In addition to the pores 204, the screen device 202 may include structures 206 such that, for instance, the pores 204 may be formed between the structures 206. According to examples, the structures 206 may be formed by fusing together build material particles during a 3D fabrication process by a 3D fabrication system. In these examples, the build material particles may be any suitable type of material that may be employed in 3D fabrication processes, such as, a metal, a plastic, a nylon, a ceramic, an alloy, and/or the like. In some examples, the screen device 202 may be formed to a have relatively thin height and may be relatively pliable. In other examples, the structures 206 may be formed through implementation of another fabrication technique. For instance, the structures 206 may be formed through selective laser ablation, selective laser melting, stereolithography, fused deposition modeling, and/or the like.

The pulp molding die 200 may also include a main body 210 on which the screen device 202 may be overlaid. The main body 210 may be formed to have a relatively larger thickness than the screen device 202 and may be substantially more rigid than the screen device 202. The main body 210 may thus provide structural support for the screen device 202. The main body 210 may also be formed of solid portions 212 and open portions 214. The solid portions 212 may be formed of a substantially rigid material, such as a metal, a plastic, a ceramic, and/or the like. In addition, the open portions 214 may be formed between the solid portions 212 through any suitable fabrication technique. For instance, the open portions 214, which may also be referenced herein as openings, pores, through holes, or the like, may be formed through a 3D fabrication process, drilling, through use of a mold, and/or the like. In any of these examples, the open portions 214 may extend from one side of the main body 210 to an opposite side of the main body 210. In some examples, the main body 210 and the screen device 202 may be formed together during a 3D fabrication process.

According to examples, and as shown in FIGS. 2A and 2B, the open portions 214 may have circular cross-sections that may be relatively larger in diameter than the pores 204. In other examples, the open portions 214 may have other shapes, such as rectangular, oval, triangular, etc., shapes. In operation, a vacuum pressure may be applied from a side of the main body 210 opposite the screen device 202 when the pulp molding die 200 is immersed in a pulp or slurry 220 containing a material. As liquid in the pulp or slurry flows through the pores 204 in the screen device 202 and the open portions 214 in the main body 210 as denoted by the arrows 222, the material 224 in the pulp or slurry may be compressed onto the screen device 202 and may take the shape of the screen device 202. Particularly, the material 224 may form into a part on the screen device 202 as the liquid is drawn from the slurry 220 and the remaining material 224 is dried.

In some examples, as the pores 204 in the screen device 202 may not exactly line up with the open portions 214 in the main body 210, the screen device 202 and/or the main body 210 may include channels that may enable the flow of liquid between sections of the apparatus 100 and the main body 210 that may be in contact with each other. The channels may thus enable pressure to be applied through a larger number of the pores 204 and thus cause liquid to flow through the larger number of the pores 204.

The digital design of the screen device 202 may be a computer model of the screen device, such as a computer aided design (CAD) file, or other digital representation of the screen device 202. In addition, the processor 102 may access the digital design from a data store (not shown) or some other suitable source.

The processor 102 may execute the instructions 114 to apply fluid dynamics modeling on the digital design of the screen device 202 to model how the slurry 220 is predicted to flow through the screen device 202 during application of a pressure, e.g., a vacuum pressure, through the screen device 202. Particularly, for instance, the processor 102 may apply the fluid dynamics modeling on a plurality of digital designs of the screen device 202 having various pore properties with respect to each other to predict attributes corresponding to a part to be formed and/or a length of time predicted to be consumed in forming the part. The predicted flow through the screen device 202 may include rates and directions at which the liquid and/or material elements are predicted to flow through the pores 204 during application of a vacuum pressure through the pores 204. Additionally, the fluid dynamics modeling may be applied on a particular type of slurry 220 and/or on multiple types of slurries having, for instance, different concentrations of material 224 and liquid.

By way of example, the processor 102 may apply a first fluid dynamics modeling on the digital design of the screen device 202 with the pores 204 having a first property to model how the slurry 220 is predicted to flow through the screen device 202 when a vacuum pressure is applied as shown, for instance, in FIG. 2B. In addition, the processor 102 may apply a second fluid dynamics modeling on the digital design of the screen device 202 with the pores 204 having a second property to model how the slurry 220 is predicted to flow through the screen device 202 when a vacuum pressure is applied. The processor 102 may apply additional fluid dynamics modeling on the digital designs of the screen device having other properties to model how the slurry 220 is predicted to flow though the screen device 202 when a vacuum pressure is applied.

According to examples, the various pore properties may be sizes, shapes, numbers, and/or locations at which the pores 204 are to be formed through the screen device 202. The sizes may include sizes in which the pores are completely closed, e.g., locations at which pores are not provided. Thus, for instance, the processor 102 may apply the fluid dynamics modeling on versions of the digital designs of the screen device 202 that may have different pore properties and the pore granularity level. In some examples, the processor 102 may also apply the fluid dynamics modeling on a reference version of the screen device 202 having equally distributed pores 204 to determine a reference performance data set.

In some examples, the first fluid dynamics modeling may be performed on a digital design of the screen device 202 with the pores 204 having a first size, the second fluid dynamics modeling may be performed on a digital design of the screen device 202 with the pores 204 having a second size, and so forth. As another example, the first fluid dynamics modeling may be performed on a digital design of the screen device 202 with the pores 204 having various sizes and being arranged in a first configuration (e.g., first density), the second fluid dynamics modeling may be performed on a digital design of the screen device 202 with the pores 204 having other various sizes and being arranged in a second configuration (e.g., second density), and so forth. The various sizes and/or configurations to be used in the fluid dynamics modeling may be determined automatically for instance through use of a digital screen device having a plurality of different pore sizes and/or configurations and analyzing each iteration to determine the pore sizes and/or configurations that results in the attributes being optimized and/or the length of time to form the part being reduced or minimized.

By way of example, the processor 102 may start the fluid dynamics modeling on a reference version of the screen device 202 and may output data coded in a manner to guide design of an optimized version of the screen device 202. In this example, areas of relatively low flow may be highlighted with one color and areas of relatively high flow with another color and the pore sizes may be adjusted based on the assigned colors of the areas.

Accordingly, for instance, the processor 102 may apply the fluid dynamics modeling on various versions of the digital design of the screen device 202, in which the pores 204 in the various versions may have uniform properties with respect to each other or may have any of various properties with respect to each other. In some examples, the processor 102 may iteratively perform the fluid dynamics modeling on the various versions, in which a certain number of iterations may be performed. The certain number of iterations may be a predefined number, a number of iterations that may be performed over a predefined time period, a number of iterations that may be considered as reaching an optimized result, and/or the like.

In addition or in other examples, the processor 102 may determine the various properties to be tested in the fluid dynamics modeling based on results of previous fluid dynamics modeling. For instance, the processor 102 may determine that certain pore sizes may result in poor outcomes and may thus increase the pore sizes until the outcomes cease to become better. By way of example, the processor 102 may determine from the modeling that a certain pore size is predicted to result in the predicted flow rates through the pores 204 being below an intended level. In further iterations, the processor 102 increases the sizes of some or all of the pores 204 until, for instance, the processor 102 determines from the modeling that the elements, e.g., fibers, of the material 224 are predicted to flow into the pores 204 at a greater than intended level.

In some examples, the employed fluid dynamics modeling may model how the slurry 220 is predicted to flow through the screen device 202 as the material elements begin to block some of the pores 204 during formation of the part. That is, as the liquid in the slurry 220 is drawn through the pores 204, some of the material elements may obstruct, or may enter into and may block some of the pores 204. The fluid dynamics modeling may model this behavior in predicting the flow through the pores 204 of the screen device 202.

According to examples, the processor 102 may employ any suitable application that may perform the fluid dynamics modeling. For instance, the processor 102 may execute a computational fluid dynamics application on the various versions of the digital design to model how the slurry 220 is predicted to flow through the screen device 202 under various pore property scenarios. The application may be an application specifically designed to model the slurry 220 behavior with respect to a digital design of a screen device 202 or a general fluid dynamics modeling application that is programmed to model the slurry 220 behavior.

The processor 102 may execute the instructions 116 to determine, based on the applied fluid dynamics modeling, the pore property of the various pore properties that is predicted to result in the part being formed to have an optimized attribute and/or the part being formed in a minimum length of time. That is, the processor 102 may analyze the results of the fluid dynamics modeling applied on the various versions of the digital design of the screen device 202. The results may include, for instance, an accuracy level of the part predicted to be formed, an amount of material 224 predicted to be used to form the part with a predefined accuracy level, a length of time predicted to be consumed in forming the part on the screen device 202, and/or the like.

The optimized attribute may be, for instance, a highest accuracy level among the modeled results, a minimized material 224 usage among the modeled results, etc. In addition, the minimized length of time may be a minimum length of time predicted to be consumed in forming the part on the screen device 202 among the modeled results.

According to examples, the processor 102 may determine the pore property with which the screen device 202 is to be formed as the pore property that is predicted to result in the part being formed to have the optimized attribute and/or the part being formed in the minimum length of time. As discussed herein, the pore property may include sizes, shapes, numbers, locations, etc., and thus, for instance, the determined pore property may indicate the locations on the screen device 202 at which a certain number of pores 204 is to be formed as well as the sizes and/or shapes of the pores 204, in which different locations may be indicated to have formed thereon different numbers of pores 204 with respect to each other.

According to examples, the processor 102 may also access a digital design of the main body 210 and may apply the fluid dynamics modeling on the digital design of the screen device 202 and the digital design of the main body 210. In other words, in some examples, the processor 102 may apply the fluid dynamics modeling on the digital design of the screen device 202 alone while in other examples, the processor 102 may apply the fluid dynamics modeling on both the digital design of the screen device 202 and the digital design of the main body 210. As the flow through the main body 210 may affect the flow through the screen device 202, the application of the fluid dynamics modeling on the combination of the screen device 202 and the main body 210 may result in outcomes that may differ from the result predicted to be achieved through application of the fluid dynamics modeling on the screen device 202 alone.

In examples in which the fluid dynamics modeling is applied to the digital designs of both the screen device 202 and the main body 210, the processor 102 may apply the fluid dynamics modeling as discussed above on the digital design of the screen device 202 and the digital design of the main body 210 to model how the slurry 220 is predicted to flow across the screen device 202 and through the screen device 202 and the main body 210. In addition, the processor 102 may determine, based on the applied fluid dynamics modeling, properties of openings (open portions 214) to be formed through the main body 210 that are to result in the part being formed to have the optimized attribute and/or the part being formed in the minimized length of time. Thus, for instance, the processor 102 may determine the results of various properties of the open portions 214 in the main body 210 in addition to the various pore properties in the screen device 202 and may determine the properties that are predicted to result in the part being formed to have the optimized attribute and/or the part being formed in the minimized length of time among the results of the modeling.

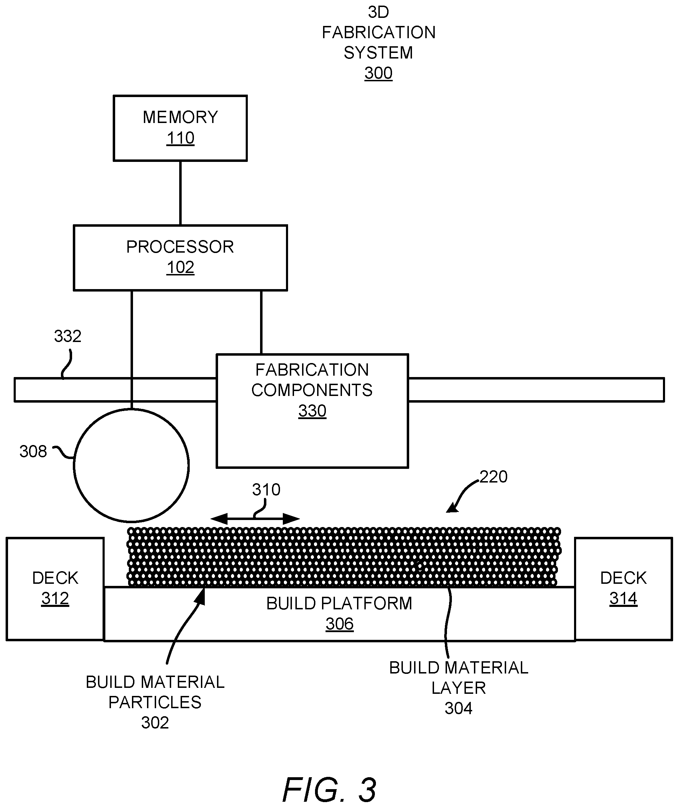

According to examples, the processor 102 may cause a three-dimensional (3D) fabrication system to fabricate the screen device 202 to have pores 204 that have the determined pore property(ies). In addition, the processor 102 may cause the 3D fabrication system to fabricate the main body 210 to have open portions 214 to have the determined property(ies) of the openings. An example of a suitable 3D fabrication system 300 that may be employed to fabricate the screen device 202, and in some examples, the main body 210, is depicted in FIG. 3. It should be understood that the example 3D fabrication system 300 depicted in FIG. 3 may include additional features and that some of the features described herein may be removed and/or modified without departing from the scope of the 3D fabrication system 300.

The build material particles 302 may be formed into a build material layer 304 on a build platform 306 during fabrication of the screen device 202, and in some examples, the main body 210. The build material particles 302 may include any suitable material for use in forming 3D objects, for instance, a polymer, a plastic, a ceramic, a nylon, a metal, combinations thereof, or the like, and may be in the form of a powder or a powder-like material. According to one example, a suitable build material may be PA12 build material commercially known as V1R10A "HP PA12" available from HP Inc. In another example, a suitable build material may be PA11 build material commercially available from HP Inc.

As shown, the 3D fabrication system 300 may include a recoater 308, which may spread, spray, or otherwise form the build material particles 302 into a build material layer 304 as the recoater 308 is moved, e.g., scanned, across the build platform 306 as indicated by the arrow 310. According to examples, the build platform 306 may provide a build area for the build material particles 302 to be spread into successive layers 304 of build material particles 302. The build platform 306 may be movable in a direction away from the recoater 308 during formation of successive build material layers 304.

According to examples, the 3D fabrication system 300 may include a deck 312 or multiple decks 312, 314 from which build material particles 302 may be supplied for formation into build material layers 304. For instance, the deck 312 may supply an amount of build material particles 302 on top of the deck 312 that the recoater 308 may push over the build platform 306 as the recoater 308 is moved across the build platform 306 as denoted by the arrow 310 to form a build material layer 304 on the build platform 306 or on a previously formed build material layer 304.

As shown, the processor 102 may control operations of the recoater 308. In other examples, however, the 3D fabrication system 300 may include a separate controller (not shown) that may control operations of the recoater 308 in which the processor 102 may communicate with the controller. The processor 102 and/or the controller 320 may control other components of the 3D fabrication system 300. For instance, the 3D fabrication system 300 may include fabrication components 330 and the memory 110 may have instructions that the processor 102 or controller may execute to control the fabrication components 330. Particularly, the processor 102 or controller may control the fabrication components 330 to cause the build material particles 302 at selected locations of the build material layer 304 to be bound and/or fused together to form the structures 206 of the screen device 202 in the build material layer 304.

The fabrication components 330 may include an agent delivery device that the processor 102 may control to selectively deliver an agent onto the build material layer 304. For instance, the processor 102 may control the agent delivery device to deliver a fusing agent onto the selected locations of the build material layer 304 that are to be bound/fused together to form the structures 206. By way of particular example, the agent delivery device may be a printhead having a plurality of nozzles in which droplet ejectors, e.g., resistors, piezoelectric actuators, and/or the like, may be provided to eject droplets of an agent through the nozzles.

According to examples, the agent may be a fusing and/or a binding agent to selectively bind and/or solidify the build material particles 302 on which the agent has been deposited. In particular examples, the agent may be a chemical binder, a thermally curable binder, and/or the like. In other particular examples, the agent may be a fusing agent that may increase the absorption of energy to selectively fuse the build material particles 302 upon which the agent has been deposited.

According to one example, a suitable fusing agent may be an ink-type formulation including carbon black, such as, for example, the fusing agent formulation commercially known as V1 Q60A "HP fusing agent" available from HP Inc. In one example, such a fusing agent may additionally include an infra-red light absorber. In one example such fusing agent may additionally include a near infra-red light absorber. In one example, such a fusing agent may additionally include a visible light absorber. In one example, such a fusing agent may additionally include a UV light absorber. Examples of fusing agents including visible light enhancers are dye based colored ink and pigment based colored ink, such as inks commercially known as CE039A and CE042A available from HP Inc.

The fabrication components 330 may also include another agent delivery device that the controller 320 may control to selectively deliver another type of agent onto the build material layer 304. The other type of agent may be a detailing agent, which may inhibit or prevent fusing of build material particles 302 upon which the detailing agent has been deposited, for example by modifying the effect of a fusing agent. According to one example, a suitable detailing agent may be a formulation commercially known as V1Q61A "HP detailing agent" available from HP Inc.

By way of example, the processor 102 may control the other agent delivery device to selectively deposit the detailing agent onto areas of the build material layer 304 that are not to be fused. For instance, the processor 102 may control the other agent delivery device to deposit the detailing agent onto areas of the layer 304 adjacent the areas that are to be fused together to form the structures 206 of the apparatus 100. In addition, the processor 102 may control the other agent delivery device to deposit the detailing agent onto the build material particles 302 positioned in areas of the layer 304 that are to remain unfused and form the pores 204 of the screen device 202 to have the determined pore property. Through implementation of the fabrication components 330, the processor 102 may cause the pores 204 to be formed of relatively small diameters, e.g., around 0.2 mm to around 1 mm. In other examples, the processor 102 may cause the pores 204 to be formed of other shapes, such as, rectangular, triangular, oval, etc.

The fabrication components 330 may also include an energy source that may apply energy, e.g., warming energy, onto the build material layer 304, for instance, to warm the build material particles 302 in the build material layer 304 to an intended temperature. The energy source may output energy, e.g., in the form of light and/or heat and may be supported on a carriage, which may be movable across the build platform 306. As such, for instance, the energy source may output energy onto the build material layer 304 as the carriage is moved across the build platform 306 to cause the build material particles 302 upon which the fusing agent has been deposited to melt and subsequently fuse together.

According to examples, the processor 102 may control movement of the fabrication components 330. That is, for instance, the controller 320 may control actuators, motors, or the like, that may control movement of the fabrication components 330 across the build platform 306. As shown, the 3D fabrication system 300 may include a mechanism 332 along which the fabrication components 330, e.g., a carriage on which the fabrication components 330 may be supported, may move across the build platform 306. The mechanism 332 may be any suitable mechanism by which and/or which may cause the carriage to be moved. For instance, the mechanism 332 may include an actuator, a belt, and/or the like that may cause the carriage to be moved.

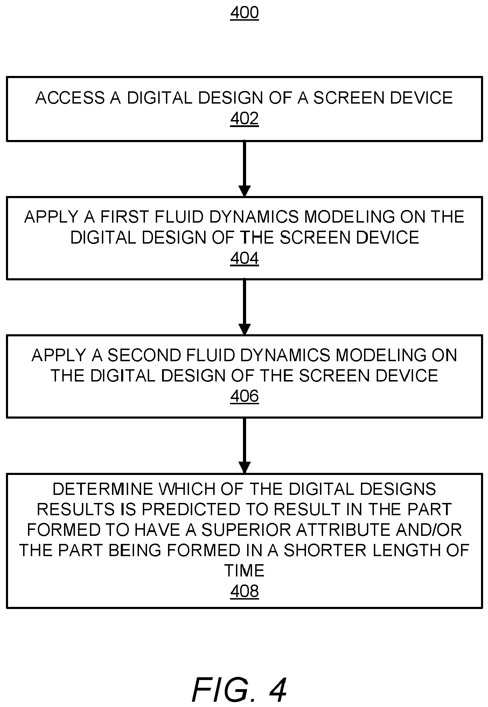

Turning now to FIG. 4, there is shown a flow diagram of an example method 400 for determining pores having a first property or a second property that is predicted to result in a part being formed to have a superior attribute and/or the part being formed in a shorter length of time for use in fabricating . It should be understood that the method 400 depicted in FIG. 4 may include additional operations and that some of the operations described therein may be removed and/or modified without departing from the scope of the method 400. The description of the method 400 is also made with reference to the features depicted in FIGS. 1-3 for purposes of illustration. Particularly, the processor 102 may execute some or all of the operations included in the method 400.

At block 402, the processor 102 may access a digital design of a screen device 202 having attributes (e.g., shape and pores 204) that are to form matching attributes on a part, in which the part is to be formed from a slurry 220 composed of a liquid and material 224 elements. The processor 102 may access the digital design, e.g., a 3D model, of the screen device 202 in any of the manners discussed herein.

At block 404, the processor 102 may apply a first fluid dynamics modeling on the digital design of the screen device 202 with pores 204 having a first property to model how a slurry 220 composed of a liquid and material elements is predicted to flow through the pores 204 having the first property during formation of a part on the screen device 202, e.g., as vacuum pressure is applied through the screen device 202. At block 406, the processor 102 may apply a second fluid dynamics modeling on the digital design of the screen device 202 with the pores 204 having a second property to model how the slurry 220 is predicted to flow through the pores 204 having the second property during formation of the part. The processor 102 may apply the first and second fluid dynamics modeling by applying the first fluid dynamics modeling and the second fluid dynamics modeling on the digital design of the screen device 202 to model how the slurry 220 is predicted to flow through the screen device 202 as the material 224 elements begin to block some of the pores 204 during formation of the part. The first fluid dynamics modeling and the second fluid dynamics modeling may be a common modeling program and may be applied to different digital designs of the screen device 202.

At block 408, the processor 102 may determine which of the digital designs of the screen device 202 with the pores 204 having the first property and the second property is predicted to result in the part being formed to have a superior attribute and/or the part being formed in a shorter length of time. Particularly, for instance, the processor 102 may determine the digital design of the screen device 202 in which pores 204 having a particular property is predicted to result in the part being formed to have a maximized accuracy level, a minimized amount of material being used to form the part, etc., among the first property and the second property. In addition, or alternatively, the processor 102 may determine the digital design of the screen device 202 in which pores 204 having a particular property is predicted to result in the part being formed in a shorter length of time among the first property and the second property.

As discussed herein, the processor 102 may also apply the fluid dynamics modeling on a digital design of the main body 210. In addition, or alternatively, the processor 102 may cause fabrication components 330 of a 3D fabrication system 300 to fabricate the screen device 202 to have pores having the determined property.

Some or all of the operations set forth in the method 400 may be contained as utilities, programs, or subprograms, in any desired computer accessible medium. In addition, the method 400 may be embodied by computer programs, which may exist in a variety of forms. For example, the method 400 may exist as machine-readable instructions, including source code, object code, executable code or other formats. Any of the above may be embodied on a non-transitory computer readable storage medium.

Examples of non-transitory computer readable storage media include computer system RAM, ROM, EPROM, EEPROM, and magnetic or optical disks or tapes. It is therefore to be understood that any electronic device capable of executing the above-described functions may perform those functions enumerated above.

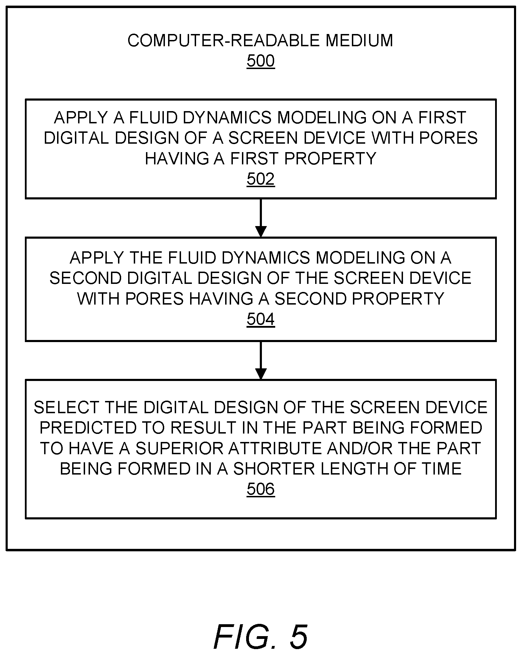

Turning now to FIG. 5, there is shown a block diagram of a computer-readable medium 500 that may have stored thereon computer-readable instructions for selecting a digital design of a screen device 202 predicted to result in the part being formed to have a superior attribute and/or the part being formed in a shorter length of time for use in fabricating the screen device 202. It should be understood that the computer-readable medium 500 depicted in FIG. 5 may include additional instructions and that some of the instructions described herein may be removed and/or modified without departing from the scope of the computer-readable medium 500 disclosed herein. The computer-readable medium 500 may be a non-transitory computer-readable medium, in which the term "non-transitory" does not encompass transitory propagating signals.

The computer-readable medium 500 may have stored thereon machine-readable instructions 502-506 that a processor, such as the processor 102 depicted in FIG. 1, may execute. The computer-readable medium 500 may be an electronic, magnetic, optical, or other physical storage device that contains or stores executable instructions. The computer-readable medium 500 may be, for example, Random Access memory (RAM), an Electrically Erasable Programmable Read-Only Memory (EEPROM), a storage device, an optical disc, and the like.

The processor may fetch, decode, and execute the instructions 502 to apply a fluid dynamics modeling on a first digital design of a screen device 202 with pores 204 having a first property to model how a liquid in a slurry 220 composed of the liquid and material elements is predicted to flow through the pores 204 having the first property during formation of a part on the screen device 202. The processor may fetch, decode, and execute the instructions 504 to apply the fluid dynamics modeling on a second digital design of the screen device 202 with the pores 204 having a second property to model how the liquid in the slurry 220 is predicted to flow through the pores 204 having the second property during formation of the part. As discussed herein, the processor may apply the fluid dynamics modeling on the first and second digital designs of the screen device 202 to model how the liquid in the slurry 220 is predicted to flow through the screen device 202 as the material elements may begin to block some of the pores 204 during formation of the part.

The processor may fetch, decode, and execute the instructions 506 to select one of the first digital design and the second digital design of the screen device 202 predicted to result in the part being formed to have a superior attribute and/or the part being formed in a shorter length of time for use in fabricating the screen device 202. As discussed herein, the first property may include a different pore size, a different number of pores, and/or different pore locations as compared with the second property.

Although described specifically throughout the entirety of the instant disclosure, representative examples of the present disclosure have utility over a wide range of applications, and the above discussion is not intended and should not be construed to be limiting, but is offered as an illustrative discussion of aspects of the disclosure.

What has been described and illustrated herein is an example of the disclosure along with some of its variations. The terms, descriptions and figures used herein are set forth by way of illustration and are not meant as limitations. Many variations are possible within the scope of the disclosure, which is intended to be defined by the following claims -- and their equivalents -- in which all terms are meant in their broadest reasonable sense unless otherwise indicated.

## Claims

1. An apparatus comprising:
a processor; and
a memory on which is stored instructions that when executed by the processor, cause the processor to:
access a digital design of a screen device having pores, wherein the screen device is to be employed to filter liquid from a slurry composed of the liquid and material elements to form a part from the material elements;
apply fluid dynamics modeling on the digital design of the screen device to model how the liquid is predicted to flow through the screen device during application of a pressure through the screen device, wherein the fluid dynamics modeling is applied on a plurality of digital designs of the screen device having various pore properties with respect to each other; and
determine, based on the applied fluid dynamics modeling, the pore property of the various pore properties that is predicted to result in the part being formed to have an optimized attribute and/or the part being formed in a minimum length of time.

2. The apparatus of claim 1, wherein the various pore properties comprise sizes, numbers, and/or locations at which the pores are to be formed through the screen device.

3. The apparatus of claim 1, wherein the fluid dynamics modeling is to model how the liquid is predicted to flow through the screen device as the material elements begin to block some of the pores during formation of the part.

4. The apparatus of claim 1, wherein the optimized attribute comprises an optimized accuracy level across the part and/or a minimized amount of material being used to form the part while the part is formed with a predefined accuracy level.

5. The apparatus of claim 1, wherein the instructions are further to cause the processor to:
cause three-dimensional (3D) fabrication components to fabricate the screen device to have pores that have the determined pore property.

6. The apparatus of claim 1, wherein the instructions are further to cause the processor to:
access a digital design of a main body upon which the screen device is to be positioned;
apply the fluid dynamics modeling on the digital design of the screen device and the digital design of the main body to model how the slurry is predicted to flow across the screen device and the liquid is predicted to flow through the screen device and the main body during application of a pressure through the screen device and the main body; and
determine, based on the applied fluid dynamics modeling, a property of openings to be formed through the main body that are to result in the part being formed to have the optimized attribute and/or the part being formed in the minimized length of time.

7. The apparatus of claim 6, wherein the instructions are further to cause the processor to:
cause three-dimensional (3D) fabrication components to fabricate the main body to have openings that have the determined property of the openings.

8. A method comprising:
accessing, by a processor, a digital design of a screen device having attributes that are to form matching attributes on a part, wherein the part is to be formed from a slurry composed of a liquid and material elements;
applying, by the processor, a first fluid dynamics modeling on the digital design of the screen device with pores having a first property to model how liquid in a slurry composed of the liquid and material elements is predicted to flow through the pores having the first property during formation of a part on the screen device;
applying, by the processor, a second fluid dynamics modeling on the digital design of the screen device with the pores having a second property to model how the liquid in the slurry is predicted to flow through the pores having the second property during formation of the part; and
determining, by the processor, which of the digital designs of the screen device with the pores having the first property and the second property is predicted to result in the part being formed to have a superior attribute and/or the part being formed in a shorter length of time.

9. The method of claim 8, wherein the first property comprises a different pore size, a different number of pores, and/or different pore locations as compared with the second property.

10. The method of claim 8, wherein applying the first fluid dynamics modeling and the second fluid dynamics modeling further comprises applying the first fluid dynamics modeling and the second fluid dynamics modeling on the digital design of the screen device to model how the liquid is predicted to flow through the screen device as the material elements begin to block some of the pores during formation of the part.

11. The method of claim 8, wherein the attribute comprises an accuracy level across the part and/or a minimized amount of material being used to form the part while the part is formed with a predefined accuracy level.

12. The method of claim 8, further comprising:
controlling fabrication components to fabricate the screen device to have pores having one of the first property and the second property based on which of the screen devices with the pores having the first property or the second property is predicted to result in the part being formed to have the superior attribute and/or the part being formed in the shorter length of time.

13. A non-transitory computer-readable medium on which is stored computer-readable instructions that when executed by a processor, cause the processor to:
apply a fluid dynamics modeling on a first digital design of a screen device with pores having a first property to model how a liquid in a slurry composed of the liquid and material elements is predicted to flow through the pores having the first property during formation of a part on the screen device;
apply the fluid dynamics modeling on a second digital design of the screen device with the pores having a second property to model how the liquid is predicted to flow through the pores having the second property during formation of the part; and
select one of the first digital design and the second digital design of the screen device predicted to result in the part being formed to have a superior attribute and/or the part being formed in a shorter length of time for use in fabricating the screen device.

14. The non-transitory computer-readable medium of claim 13, wherein the first property comprises a different pore size, a different number of pores, and/or different pore locations as compared with the second property.

15. The non-transitory computer-readable medium of claim 13, wherein the instructions are to cause the processor to apply the fluid dynamics modeling on the first and second digital designs of the screen device to model how the liquid is predicted to flow through the screen device as the material elements begin to block some of the pores during formation of the part.
